# EUROPÄISCHE PATENTSCHRIFT

(11) **EP 1 655 227 B1**
(45) Veröffentlichungstag und Bekanntmachung des Hinweises auf die Patenterteilung: **05.12.2007**
(21) Anmeldenummer: 05023209.9
(22) Anmeldetag: 25.10.2005
(51) Int. Cl.: B65B 21/18

(54) **Vorrichtung zum Entnehmen von Gefässen aus Transportbehälter**
Machine for unloading of containers from transporting outercase
Dispositif pour déballer de conteneurs hors de la caisse de transport

(30) Priorität: 09.11.2004 DE 202004017396 U
(43) Veröffentlichungstag der Anmeldung: 10.05.2006
(73) Patentinhaber: KRONES AG, 93073 Neutraubling (DE)
(72) Erfinder: Haupt, Johann, 85356 Freising (DE)

(56) Entgegenhaltungen:
- EP-A- 0 010 686
- EP-A- 1 544 108
- DE-A1- 2 457 961
- US-A- 5 505 311
- US-A1- 2003 168 873
- US-B1- 6 688 839

## Beschreibung

Die Erfindung betrifft eine Vorrichtung zum Entnehmen von Gefäßen aus Transportbehältern, insbesondere von Flaschen aus Kästen, gemäß dem Oberbegriff des Anspruchs 1.

Es ist bereits eine derartige Vorrichtung bekannt, in der mit geringem Aufwand und hoher Leistung ein Sortieren von Leergut verschiedenster Art möglich ist (EP 638 478 B1). Mit der bekannten Vorrichtung können allerdings infolge des identischen Aufbaus der Gruppen von Greifelementen nur identische Transportbehälter, beispielsweise 20er Kästen, verarbeitet werden. Andere Kästen, beispielsweise 24er Kästen, müssen vorher ausgeleitet werden.

Der Erfindung liegt die Aufgabe zu Grunde, eine Vorrichtung der eingangs genannten Art mit einfachen Mitteln dahingehend zu verbessern, dass auch unterschiedliche Transportbehälter verarbeitet werden können.

Diese Aufgabe wird durch die im Anspruch 1 angegebenen Merkmale gelöst.

Dadurch, dass die Traverse mit Gruppen von Greifelementen für unterschiedliche Gefäßkonfigurationen bestückt ist, z.B. für 20er und 24er Kästen, können diese zusammen in ein und derselben Vorrichtung behandelt werden.

Vorteilhafte Weiterbildungen der Erfindung sind in den Unteransprüchen angegeben.

Im Nachstehenden wird ein Ausführungsbeispiel der Erfindung an Hand der Zeichnungen beschrieben. Es zeigen:
- Fig. 1: die schematische Seitenansicht einer Auspackmaschine,
- Fig. 2: die schematische Draufsicht auf die Auspackmaschine nach Fig. 1,
- Fig. 3: die schematische Ansicht Y nach Fig. 1.

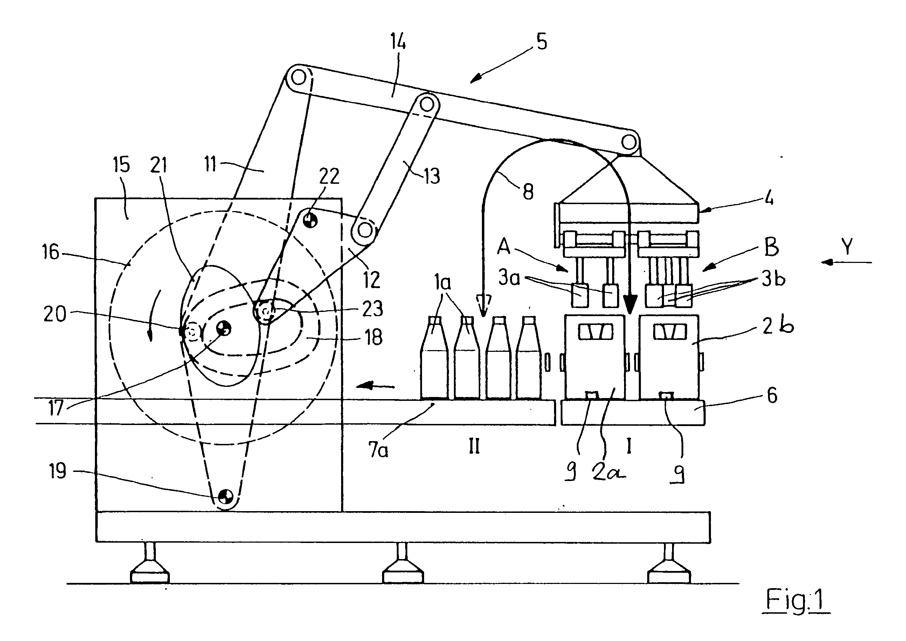

Wie aus der Fig. 1 erkennbar, werden die Greifelemente 3 von einer Traverse 4 gehalten, die mittels einer zwangsgesteuerten Aufhängung 5 auf einer hakenförmigen Bahn 8 abwechselnd vor- und zurückbewegt wird. Die Aufhängung 5 ist als ein kurvengesteuertes Hebelgetriebe ausgebildet und besitzt insgesamt vier Hebel 11, 12, 13 und 14, wobei die Hebel 11 und 12 an einer senkrechtstehenden Gestellplatte 15 angelenkt sind. An der Gestellplatte 15 ist außerdem eine durch einen nicht dargestellten Antrieb um eine Drehachse 17 kontinuierlich umlaufend antreibbare Kurvenscheibe 16 gelagert, die an ihrer vom Betrachter abgewandten Seite mit einer Nutkurve 18 ausgestattet ist. In diese Nutkurve 18 greift eine an dem um die Schwenkachse 19 beweglich gelagerten Hebel 11 befestigte Kurvenrolle 20 ein. Ferner ist die Kurvenscheibe 16 verdrehfest mit einer Nockenscheibe 21 verbunden, an deren Außenkontur eine mit dem um eine Schwenkachse 22 beweglich gelagerten Hebel 12 verbundene Kurvenrolle 23 anliegt. Der die Traverse 4 gelenkig haltende Hebel 14 ist an dem gesteuerten Hebel 11 angelenkt und wird durch den Hebel 13 abgestützt, der seinerseits wiederum an dem ebenfalls gesteuerten Hebel 12 angelenkt ist.

Ein Endpunkt der hakenförmigen Bahn 8 ist einer Gefäßentnahmestation I und der zweite Endpunkt einer Gefäßabgabestation II zugeordnet. Die Zufuhr von auszupackenden Transportbehältern, in diesem Fall Flaschenkästen 2, zur Gefäßentnahmestation erfolgt durch einen, oder erforderlichenfalls mehrere, Kastenförderer 6. Zur Abfuhr der aus den Flaschenkästen entnommenen Flaschen 1a, 1b, 1c, 1d sind der Gefäßabgabestation II Gefäß- bzw. Flaschenförderer 7a, 7b, 7c und 7d zugeordnet.

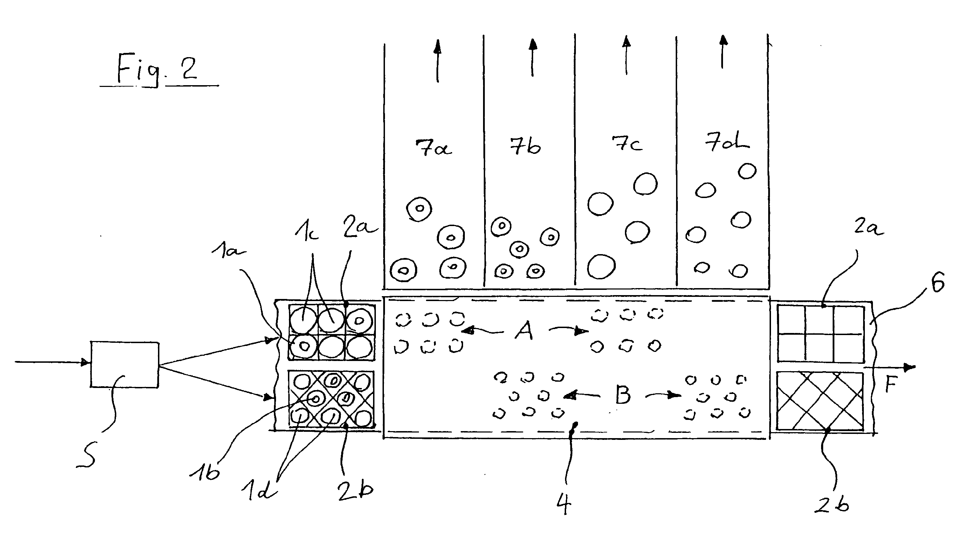

Aus den Fig. 1 und 2 ist ersichtlich, dass der Kastenförderer 6 zwei Förderspuren besitzt, d.h. zwei parallele Kastenreihen gleichzeitig der Auspackmaschine zugeführt werden können. Durch diese Maßnahme wird eine Erhöhung der Auspackleistung erreicht.

Die in den Fig. 1 bis 3 schematisch dargestellte Auspackmaschine trägt an ihrer gemeinsamen Traverse 4 zwei verschiedene Gruppen A und B bildende Greifelemente 3a und 3b, wobei die Gruppe A jeweils sechs und die Gruppe B jeweils acht Greifelemente entsprechend der Konfiguration der Flaschen in einem 6er-Kasten und 8er-Kasten aufweist

Insgesamt sind an der Traverse 4 vier Gruppen von Greifelementen aufgehängt und zwar zwei Gruppen A und zwei Gruppen B in versetzter Anordnung gemäß Fig. 2. Alle Greifelemente 3a und 3b sind selektiv ansteuerbar. Die Ansteuerung erfolgt durch eine nicht gezeigte Kamera, die im Einlauf vor den Greifelementen 3a und 3b angeordnet ist und die Verteilung der Flaschen 1 in den Kästen 2 erfasst, in Verbindung mit einem Rechner, der den Weg der Kästen 2 durch die Vorrichtung verfolgt.

Dem zweibahnigen Kastenförderer 6 ist eine Sortierstation S vorgeordnet, in der die 6er-Kästen auf die in Transportrichtung gesehen linke Bahn und die 8er-Kästen auf die in Transportrichtung gesehen rechte Bahn des Kastenförderers 6 versetzt werden. Auf diese Weise ist sichergestellt, dass die 6er-Kästen nur mit den Gruppen A der Greifelemente 3a und die 8er-Kästen nur mit dem Gruppen B der Greifelemente 3b beaufschlagt werden.

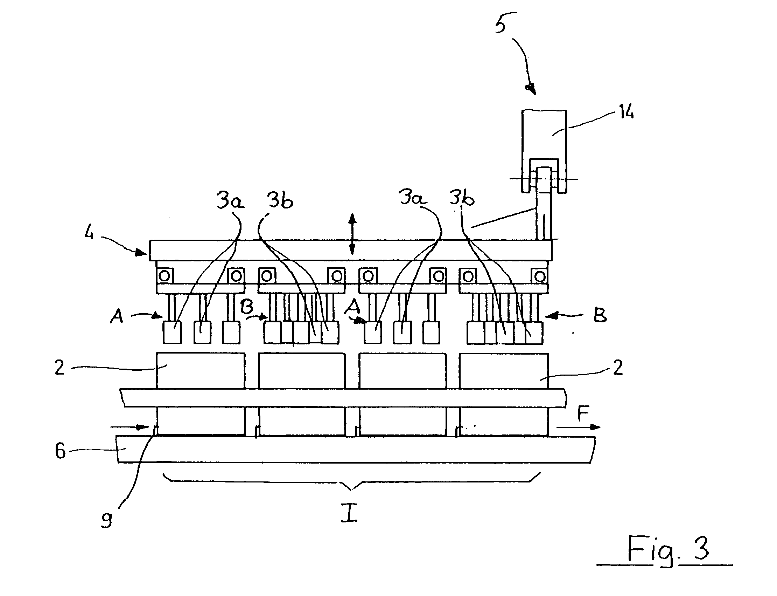

Durch den mit Mitnehmern 9 für exakten Transport versehenen Kastenförderer 6 werden die Kästen 2 taktweise durch die Auspackmaschine transportiert; links die 6er-Kästen 2a und rechts die 8er-Kästen 2b. Die Vorschublänge entspricht dem Abstand zwischen zwei Mitnehmern 9. Im Stillstand des Kastenförderers 6 nehmen die Kästen 2 die in Fig. 2 und 3 gezeigte Lage ein, in der sie exakt mit den Gruppen A und B von Greifern 3a und 3b korrespondieren.

Während des Stillstands des Kastenförderers 6 fährt die Aufhängung 5 mit der Traverse 4 in die Gefäßentnahmeposition (rechter Endpunkt der Bahn 8) und wieder zurück. Dabei werden durch selektive Ansteuerung der Greifelemente 3a und 3b bestimmte Flaschen 1 aus den Kästen 2 entnommen und auf einem der Flaschenabförderer 7a bis 7d abgestellt. Es sind entsprechend der Anordnung der Gruppen A und B gemäß Fig. 2 die Flaschenabförderer 7a und 7c für die Flaschen aus den 6er-Kästen 1a und die Flaschenabförderer 7b und 7d für die Flaschen aus den 8er-Kästen 2b bestimmt. Auf Grund der versetzten Anordnung der Gruppen A und B wird jeder Kasten 2 nur während jedes zweiten Arbeitstakts von Greifelementen 3a und 3b beaufschlagt. Es können so aus den 6er-Kästen und aus den 8er-Kästen jeweils Fremdflaschen, z.B. Flaschen mit abweichender Form und/oder Farbe, abweichender Höhe usw., gezielt ausgepackt und auf einen zugeordneten Flaschenabförderer transferiert werden. Durch Anordnung weiterer Gruppen A bzw. B an der Traverse 4 können selbstverständlich auch mehr als zwei Flaschensorten sowohl aus den 6er-Kästen als auch aus den 8er-Kästen entnommen werden. Auch können unterschiedlich viele Gruppen A und B an der Traverse 4 angeordnet werden, z.B. wenn in den 6er-Kästen mehrere unterschiedliche Flaschensorten zu entnehmen sind als aus den 8er-Kästen. Auch können bestimmte Flaschen 1 (Gutflaschen) in den Kästen 1 verbleiben.

Ferner können die Kästen 2 in einer Reihe auf dem Kastenförderer 6 durch die Auspackmaschine transportiert werden. In diesem Falle ist darauf zu achten, dass abwechselnd 6er- und 8er-Kästen auf dem Kastenförderer 6 angeordnet sind und dass erforderlichenfalls die jeweils nicht aktiven Gruppen A oder B durch Aufheben bezüglich der Traverse 4 deaktiviert werden, wenn sie einen "falschen" Kasten mit anderer Gefacheinteilung beaufschlagen würden. Auch können beliebig mehr als zwei Reihen von Kästen 2 auf dem Kästenförderer 6 transportiert werden, wobei die Anordnung der Gruppen A, B, C usw. entsprechend anzupassen ist.

Für die Bewegung der Traverse kann anstelle des beschriebenen Hebelgetriebes selbstverständlich jede andere geeignete Einrichtung eingesetzt werden, z. B. ein Linearroboter oder Knickarmroboter.

In jedem Falle ist es möglich, in einer einzigen Auspackmaschine in unterschiedlichen Kästen befindliche Flaschen gezielt zu sortieren.

## Patentansprüche

1. Vorrichtung zum Entnehmen von Gefäßen (1) aus Transportbehältern (2), insbesondere von Flaschen aus Kästen, wobei jeder Transportbehälter mindestens zwei Gruppen von Greifelementen (3) passiert und zumindest eine Gruppe von Greifelementen nur Gefäße mit bestimmten Merkmalen erfasst und aus den Transportbehältern entnimmt und wobei die verschiedenen Gruppen von Greifelementen von einer gemeinsamen Traverse (4) getragen werden, die mittels einer Aufhängung (5) von einer Gefäßentnahmestation (I) zu einer Gefäßabgabestation (II) und zurück verfahrbar ist, **dadurch gekennzeichnet, dass** an der gemeinsamen Traverse (4) mindestens zwei Gruppen (A, B) selektiv ansteuerbarer, verschieden konfigurierter Greifelemente (3a, 3b) für verschiedene Kästen (2a, 2b) angeordnet sind.

2. Vorrichtung nach Anspruch 1, **dadurch gekennzeichnet, dass** die verschiedenen Kästen (2a, 2b) auf einem Kastenförderer (6) in einer Linie abwechselnd nacheinander taktweise an den in einer Linie an der Traverse (4) angeordneten Gruppen (A, B) selektiv ansteuerbarer, verschieden konfigurierter Greifelemente (3a, 3b) vorbeiführbar sind.

3. Vorrichtung nach Anspruch 1, **dadurch gekennzeichnet, dass** die verschiedenen Kästen (2a, 2b) in mehreren Reihen nebeneinander taktweise an den in einer entsprechenden Anzahl von Reihen versetzt an der Traverse angeordneten Gruppen (A, B) selektiv ansteuerbarer, verschieden konfigurierter Greifelemente (3a, 3b) vorbeiführbar sind.

## Claims

1. Apparatus for removing receptacles (1) from transport containers (2), in particular bottles from boxes, each transport container passing at least two groups of gripping elements (3) and at least one group of gripping elements grasping only receptacles having specific features and extracting them from the transport containers, and the different groups of gripping elements being carried by a common cross-member (4) which can be moved by means of a suspension (5) from a receptacle extraction station (I) to a receptacle delivery station (II) and back, **characterised in that** at least two groups (A, B) of selectively activatable, differently configured gripping elements (3a, 3b) for different boxes (2a, 2b) are arranged on the common cross-member (4).

2. Apparatus according to Claim 1, **characterised in that** the different boxes (2a, 2b) can be moved on a box conveyor (6) in a line in alternating succession in a phased manner past the groups (A, B) of selectively activatable, differently configured gripping elements (3a, 3b) which are arranged in a line on the cross-member (4).

3. Apparatus according to Claim 1, **characterised in that** the different boxes (2a, 2b) can be moved in a plurality of rows side-by-side in a phased manner past the groups (A, B) of selectively activatable, differently configured gripping elements (3a, 3b) which are arranged in an offset manner in a corresponding number of rows on the cross-member.

## Revendications

1. Dispositif pour prélever des récipients (1) de conteneurs de transport (2), notamment des bouteilles dans des caisses, selon lequel
chaque conteneur de transport passe sur au moins deux groupes d'éléments de préhension (3) et au moins un groupe d'éléments de préhension ne prend que les récipients ayant certaines caractéristiques pour les prélever des conteneurs de transport et
les différents groupes d'éléments de préhension sont portés par une traverse (4) commune transportée par l'intermédiaire d'une suspension (5) d'un poste de prélèvement de récipients (1) vers un poste de dépose de récipients (II) et inversement,
**caractérisé en ce que**
la traverse commune (4) comporte au moins deux groupes (A, B) d'éléments de préhension (3a, 3b) configurés différemment et à commande sélective pour différentes caisses (2a, 2b).

2. Dispositif selon la revendication 1,
**caractérisé en ce que**
les différentes caisses (2a, 2b) passent sur un convoyeur à caisses (6) selon une ligne, de façon alternée, successivement, en cadence devant les groupes (A, B) d'éléments de préhension (3a, 3b) à configurations différentes et commande sélective, installés sur la traverse (4).

3. Dispositif selon la revendication 1,
**caractérisé en ce que**
les différentes caisses (2a, 2b) passent suivant plusieurs rangées, successivement, en cadence, devant les éléments de préhension (3a, 3b) à configurations différentes, des groupes (A, B) commandés sélectivement, installés en nombre correspondant avec décalage de rangées sur la traverse.
